# EUROPÄISCHE PATENTSCHRIFT

(11) **EP 0 330 278 B1**
(45) Veröffentlichungstag und Bekanntmachung des Hinweises auf die Patenterteilung: **15.09.1993**
(21) Anmeldenummer: 89200410.2
(22) Anmeldetag: 20.02.1989
(51) Int. Cl.: G02B 6/44

(54) **Optisches Seekabel**
Optical submarine cable
Câble optique sous marin

(30) Priorität: 25.02.1988 DE 3805848
(43) Veröffentlichungstag der Anmeldung: 30.08.1989
(73) Patentinhaber: Philips Patentverwaltung GmbH, 22335 Hamburg (DE); Philips Electronics N.V., 5621 BA Eindhoven (NL)
(72) Erfinder: Brüggendieck, Siegfried, D-5060 Bergisch-Gladbach (DE)
(74) Vertreter: Koch, Ingo

(56) Entgegenhaltungen:
- EP-A- 0 224 598
- DE-A- 3 810 746
- GB-A- 2 155 656
- GB-A- 2 193 552
- US-A- 4 432 605
- PATENT ABSTRACTS OF JAPAN, Band 6, Nr. 51 (P-108)[929], 6. April 1982; & JP-A-56 164 308
- PATENT ABSTRACTS OF JAPAN, Band 7, Nr. 73 (P-186)[1218], 25. März 1983; & JP-A-58 2804

## Beschreibung

Die Erfindung bezieht sich auf ein optisches Seekabel mit einer Kabelseele, welche aus einer inneren Hülle mit mindestens einem darin geführten Lichtwellenleiter (LWL) besteht, sowie mit einer die Kabelseele mit radialem Spiel umgebenden Bewehrungshülle, welche eine aus mindestens drei Segmentelementen gebildete druckfeste Metallschicht sowie eine diese umgebende Verseilschicht aus Verseildrähten enthält.

Bei einer derartigen durch die EP-A-0224598 bekannten Anordnung ist der Spaltraum zwischen einer optischen Kabelseele und der diese mit radialem Spiel umgebenden Bewehrungshülle mit einer gelartigen Masse gefüllt, welche das Eindringen von Wasser verhindern soll. Das Hindurchdringen von Wasser durch die aus drei Segmenten zusammengefügte druckfeste Metallschicht soll durch besondere Behandlung der Stoßflächen der Segmente wie z.B. durch deren Aufrauhen erschwert werden. Bei einem derartigen Seekabel läßt sich nicht ausschließen, daß an irgendeiner Stelle der Kabellänge Wasser durch die Bewehrungshülle gedrückt wird, welches dann mit hohem Druck auf die Kabelseele einwirkt und diese beschädigen oder in diese eindringen kann,
Ein Seekabel der eingangs genannten Art ist auch durch JP-A-56-164308 bekannt. Dort sind die Verseildrähte von einem metallischen Rohr umgeben.
Weiterhin sind absolut wasserdichte optische Seekabel bekannt, welche aus einem um mindestens einen LWL gefalteten und stumpf durch Laser nahtgeschweißten Metallröhrchen bestehen. Die LWL sind mit Abstand umhüllt, so daß sie radial beweglich sind. Derartige Seekabel sind wegen der geringen Wandstärke des Metallröhrchens sehr empfindlich gegen scharfe Knickbiegungen, wie sie bei der Verlegung nicht ausgeschlossen werden können. Plastisch verformte Knickstellen sind dann nicht mehr druckbeständig, so daß dort bei vollem Wasserdruck im Extremfall eine Unterbrechung eines LWL, zumindest aber Dämpfungserhöhungen der LWL verursacht werden können.

Durch die US-PS 44 32 605 sind mehrschichtige Metallhüllen für Seekabel beschrieben, welche eine erheblich größere Gesamtwandstärke aufweisen. Die Herstellung eines solchen Seekabels ist aufwendig. Die Biegsamkeit bzw. Flexibilität ist zu gering.
Der Erfindung liegt die Aufgabe zugrunde, das Seekabel der eingangs genannten Art derart zu gestalten, daß die Kabelseele ausreichend biegbar und flexibel ist. Weiterhin soll die Kabelseele sowohl gegen das Eindringen von Seewasser als auch gegen Verformung durch den Unterwasserdruck gesichert sein. Schließlich sollen beim Verlegen nicht ausschließbare überhöhte Biegebeanspruchungen nicht zu einer Beeinträchtigung der Betriebsfestigkeit des Seekabels führen.
Diese Anforderungen werden bei einem optischen Seekabel der eingangs genannten Art dadurch erfüllt, daß die innere Hülle aus einem um die LWL gefalteten nahtgeschweißten korrosionsfesten Metallröhrchen besteht, welches hermetisch dicht und biegsam ist und in welchem die LWL radial beweglich geführt sind, daß der Spaltraum zwischen der inneren Hülle und der druckfesten Metallschicht füllmittelfrei ist, und daß die Segmentelemente aneinander gleitfähig anliegen und um die Kabelseele gewendelt sind.
Die aus einem korrosionsfesten Metall wie insbesondere aus einer Edelstahllegierung bestehende innere Hülle ist trotz geringen Durchmessers und trotz geringer Wandstärke als zylindrisches Element ausreichend stabil gegen in großen Verlegetiefen wirkenden hohen Wasserdruck. Sie ist auch absolut wasserdicht. Der geringe Durchmesser von insbesondere weniger als 6 mm sowie die geringe Wandstärke von insbesondere weniger als 0,3 mm ergeben eine hervorragende Biegsamkeit. Die Widerstandsfähigkeit der Kabelseele gegen hohen Wasserdruck wäre jedoch nicht mehr gewährleistet, wenn an irgendeiner Stelle plastische Verformungen beispielsweise durch Knickungen entstehen könnten. Da aber die umgebende Bewehrungshülle nicht mehr wasserdicht zu sein braucht, kann sie speziell im Hinblick auf gute Biegbarkeit und Druckfestigkeit optimiert werden. Bei erfindungsgemäßem Aufbau können selbst unsachgemäße Beanspruchungen des optischen Kabels von der Bewehrungshülle sicher aufgefangen werden, ohne daß das dünnwandige Metallröhrchen plastisch verformt wird. Da die aus Segmenten bestehende druckfeste Metallschicht nicht wasserdicht zu sein braucht, dürfen die Segmente gegeneinander unbehindert gleitfähig gestaltet sein. Dadurch wird die Biegbarkeit des Seekabels verbessert. Selbst wenn bei der Verlegung des Kabels der zulässige Biegeradius unterschritten werden sollte, kann die empfindliche Kabelseele nicht verformt werden, weil sie mit freiem Spiel innerhalb der Bewehrungsschicht liegt. Verformungen der Bewehrungsschicht werden nicht auf die Kabelseele übertragen. Ein solches freies Spiel wird erfindungsgemäß auch nicht durch eine Gelfüllung behindert. Es wurde nämlich festgestellt, daß Verformungen der Bewehrungsschicht auch über eine Gelschicht auf die Kabelseele übertragen werden können.

Eine hervorragende Biegbarkeit ergibt sich dadurch, daß die Verseildrähte einen kreisrunden Querschnitt haben und daß die radialen und tangentialen Abmessungen der Segmentelemente wesentlich größer als der Durchmesser der Verseildrähte sind.

Bei einem durch die GB-A 21 55 656 bekannten elektrischen Freileitungsseil ist ein LWL radial beweglich in einer Hülle angeordnet, welche aus einem Aluminiumstreifen mit aneinanderstoßenden Kanten um den LWL geformt wurde. Die Hülle ist radial beweglich in einem durch Profilelemente des Freileiters gebildeten Hohlraum. Darüber sind weitere aus Profilelementen gebildete Schichten mit radialem Spiel angeordnet.

Bei diesem bekannten elektrischen Freileitungsseil sollen durch die freie Beweglichkeit der optischen Nachrichtenleitung in einer Hohlkammer des Freileitungsseils Vibrationen vermieden werden. Bei der vorliegenden Erfindung handelt es sich jedoch um ein Seekabel, also um ein Kabel anderer Gattung, bei welchem vollständig andere Probleme gelöst werden müssen. Dementsprechend soll der erfindungsgemäß vorgesehene Spaltraum verhindern, daß mechanische Druckverformungen der äußeren Bewehrungsschichten auf die innere Metallhülle einwirken können. Die innere Aluminiumhülle des bekannten Freileitungsseils soll und kann keinem hohen Wasserdruck widerstehen. Sie ist auch nicht korrosionsfest. Wesentliche Merkmale der vorliegenden Erfindung sind deshalb, daß die Nahtkanten der Metallhülle verschweißt sind. Dann entsteht ein hermetisch geschlossenes formstabiles Rohr, in welchem der darin geführte LWL gegen das Eindringen von Wasser auch bei Verlegung in großen Meerestiefen geschützt ist.

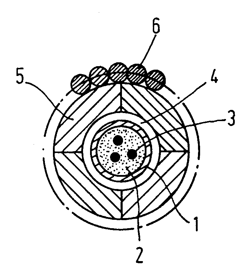

Die Erfindung wird anhand eines in der Zeichnung dargestellten Ausführungsbeispiels näher erläutert. Die einzige Figur zeigt einen Querschnitt durch ein optisches Seekabel, bei welchem die für die Erfindung wesentlichen Aufbauschichten dargestellt sind.

Eine optische Kabelseele ist durch ein nahtgeschweißtes Edelstahlröhrchen 1 gebildet, in welchem innerhalb einer Gelfüllung 2 drei LWL 3 verlaufen. Diese Kabelseele liegt radial frei beweglich (Spaltraum 4) innerhalb einer Bewehrungshülle, von welcher die aus vier Stahl-Segmentelementen 5 bestehende druckfeste Schicht und eine aus kreisrunden Stahldrähten 6 bestehende Verseilschicht dargestellt sind.

Wenn die Segmentelemente 5 um die Kabelseele gewendelt sind, wird die Schlagrichtung der kreisrunden Stahldrähte 6 gegenläufig gewählt. Auf die Verseilschicht der Stahldrähte 6 kann eine zweite gegensinnig verseilte Schicht aus ebenfalls kreisrunden Stahldrähten folgen. Darüber können weitere Mantelschichten, insbesondere ein Kunststoffaußenmantel angeordnet sein. In den Spaltraum 4 ist keine Gelfüllung eingebracht. Dieser füllt sich im allgemeinen mit Seewasser, welches in das Metallröhrchen 1 jedoch nicht eindringen kann, da es an den Nahtkanten hermetisch dicht verschweißt ist.

## Patentansprüche

1. Optisches Seekabel mit einer Kabelseele, welche aus einer inneren Hülle mit mindestens einem darin geführten Lichtwellenleiter (LWL) besteht, sowie mit einer die Kabelseele mit radialem Spiel umgebenden Bewehrungshülle, welche eine aus mindestens drei Segmentelementen gebildete druckfeste Metallschicht sowie eine diese umgebende Verseilschicht aus Verseildrähten enthält,
dadurch gekennzeichnet, daß die innere Hülle aus einem um die LWL gefalteten nahtgeschweißten korrosionsfesten Metallröhrchen (1) besteht, welches hermetisch dicht und biegsam ist und in welchem die LWL (3) radial beweglich geführt sind, daß der Spaltraum (4) zwischen der inneren Hülle (1) und der druckfesten Metallschicht (5) füllmittelfrei ist, und daß die Segmentelemente (5) aneinander gleitfähig anliegen und um die Kabelseele gewendelt sind.

2. Optisches Seekabel nach Anspruch 1,
dadurch gekennzeichnet, daß das Metallrohrchen (1) aus einer korrosionsfesten Edelstahllegierung besteht und eine Wandstärke von weniger als 0,3 mm hat.

3. Optisches Seekabel nach Anspruch 1 oder 2,
dadurch gekennzeichnet, daß der Durchmesser der Metallröhrchen (1) höchstens 6 mm beträgt.

4. Optisches Seekabel nach einem der Ansprüche 1 bis 3,
dadurch gekennzeichnet, daß die Verseildrähte einen kreisrunden Querschnitt haben und daß die radialen und tangentialen Abmessungen der Segmentelemente wesentlich größer als der Durchmesser der Verseildrähte sind.

## Claims

1. An optical fibre submarine cable having a cable core which consists of an inner sheath in which at least one optical waveguide (OWG) is arranged, and having an armouring sheath which surrounds the cable core with radial play, said armouring sheath comprising a pressure-resistant metal layer which is built up of at least three segmental elements and a layer of stranded wires surrounding said metal layer, characterized in that the inner sheath consists of a seam-welded, corrosion-resistant metal tube (1) which is folded around the OMG(s) and which is hermetically sealed and flexible and in which the OWGs (3) are arranged so as to be radially movable, in that the clearance (4) between the inner sheath (1) and the pressure-resistant metal layer (5) is free of filling agents, and in that the segmental elements (5) are arranged so that they can slide upon one another, and they are wound around the cable core.

2. An optical fibre submarine cable as claimed in Claim 1, characterized in that the metal tube (1) consists of a corrosion-resistant, high-grade steel alloy and has a wall thickness of less than 0.3 mm.

3. An optical fibre submarine cable as claimed in Claim 1 or 2, characterized in that the diameter of the metal tubes (1) is maximally 6 mm.

4. An optical fibre submarine cable as claimed in one of the Claims 1 to 3, characterized in that the stranded wires have a round cross-section and that the radial and tangential dimensions of the segmental elements substantially exceed the diameter of the stranded wires.

## Revendications

1. Câble sous-marin optique présentant un coeur de câble, constitué d'une gaine intérieure renfermant au moins un guide de lumière, ainsi que d'une gaine d'armature entourant le coeur de câble d'un jeu radial, ladite gaine d'armature comportant une couche métallique résistant à la pression constituée au moins de trois éléments de segment ainsi qu'une couche de revêtement en fils toronnés enveloppant ladite couche métallique, caractérisé en ce que la gaine intérieure est constituée par un tube métallique 1 résistant à la corrosion plié autour du guide de lumière et soudé au galet, qui est hermétiquement étanche et flexible et dans lequel les guides de lumière (3) sont situés de manière à être radialement amovibles, en ce que l'espace (4) entre la gaine intérieure (1) et la couche métallique (5) résistant à la pression est exempt de moyens de remplissage, et en ce que les éléments de segment spiralés autour du coeur de câble sont mutuellement adjacents, avec glissement possible.

2. Câble sous-marin optique selon la revendication 1, caractérisé en ce que le tube métallique (1) est constitué d'un alliage de métal spécial résistant à la corrosion et présentant une épaisseur de paroi inférieure à 0,3 mm.

3. Câble sous-marin optique selon la revendication 1 ou 2, caractérisé en ce que le diamètre du tube métallique (1) est tout au plus égal à 6 mm.

4. Câble sous-marin optique selon l'une quelconque des revendications 1 à 3, caractérisé en ce que les fils de toronnage présentent une coupe circulaire et en ce que les dimensions radiales et tangentielles des éléments de segment sont sensiblement supérieures au diamètre des fils de toronnage.
